# EUROPEAN PATENT APPLICATION

(11) **EP 0 702 051 A1**
(43) Date of publication of application: **20.03.1996**
(21) Application number: 95117366.5
(22) Date of filing: 19.08.1992
(51) Int. Cl.: C08J 9/12, C08G 18/40, C08G 18/48

(54) **Polyurethanes having improved physical properties**

(30) Priority: 20.08.1991 US 747549; 03.12.1991 US 802070
(62) Divisional of application: 92918902.5
(71) Applicant: THE DOW CHEMICAL COMPANY, Midland, Michigan 48640 (US)
(72) Inventor: Parks, Franklin E., Jones Creek, TX 77541 (US); Schrock, Alan K., Lake Jackson, TX 77466 (US); Priester, Ralph D., Jr., Lake Jackson, TX 77566 (US); Turner, Robert B., Lake Jackson, TX 77566 (US); McClusky, John V., Alvin, TX 77511 (US); Wiltz, Eugene P., Jr., Lake Jackson, TX 77566 (US); Thomas, Raymond E., Lake Jackson, TX 77566 (US)
(74) Representative: Huber, Bernhard, Dipl.-Chem.

(57) **Abstract**

A flexible polyurethane foam composition is prepared from a formulation containing (1) an organic polyisocyanate, (2) an isocyanate-reactive component, (3) a catalyst, and (4) water as a blowing agent, wherein the organic polyisocyanate and the isocyanate-reactive component are present in amounts such that an isocyanate index of from 80 to 105 is attained and the isocyanate-reactive component has an average nominal functionality of greater than or equal to 3.

## Description

The present invention relates to polyurethane polymers, in particular, to polyurethane foams having improved physical properties, such as compression set.

Flexible polyurethane foam uses commonly include packaging, insulation, cushioning, carpet underlay and the like. It is desirable for the foams to exhibit good load bearing capability, resiliency, tensile strength and tear strength, in order to meet acceptable performance and durability standards.

Flexible polyurethane foams are most often prepared by the well-known "one-shot" technique, in which the starting materials are reacted and foamed in one step. The starting materials usually include a polyol, a polyisocyanate, one or more catalysts and surfactants and, as a blowing agent, water. Auxiliary blowing agents such as highly volatile halocarbon and hydrocarbon compounds are also frequently used.

Flexible polyurethane foams may be produced by slab foam or molded processes. Slab foams are produced in large buns which, after curing, are sliced or otherwise formed into useful shapes. For example, carpet underlay can be prepared in this manner. Molding is used to directly produce foam objects in essentially their final shape and form. Automotive seating and some furniture cushioning are commonly molded. For this purpose the demold time and characteristics of a polyurethane formulation are taken into consideration. Demold time is the time from the mixing of the isocyanate and isocyanate-reactive materials to the removal of the foam from the mold. Commercially a demold time of less than 8 minutes, preferably less than 5 minutes, is highly desirable.

The amount of water and/or other blowing agent used in a flexible polyurethane foam formulation determines the density and also affects certain other characteristics of the final foam. These other characteristics often include load-bearing characteristics, tear strength, tensile strength and the like. Other common foam components, such as silicone surfactants and catalysts, affect the final foam by controlling foam cell size. The ratios of components are balanced to achieve desired final properties and feasible processing capabilities.

While it is desirable for many applications to obtain a low density, problems are encountered when relatively large amounts of water are employed. Processing difficulties, poor physical properties and, sometimes, collapse of the foam can result. One processing difficulty is the significant exotherm from the reaction of the isocyanate with larger amounts of water to produce the carbon dioxide blowing gas. This exotherm can result in severe loss of foam integrity and even spontaneous combustion.

One method of dealing with the exotherm problem is to reduce the "isocyanate index" of the foam. The "isocyanate index" of a foam is the stoichiometric ratio of the isocyanate component to the isocyanate-reactive component, multiplied by 100. However, foams made from many common commercial polyols at reduced index, for example, at less than 100 index, commonly suffer significant reductions in tensile strength, tear strength and elongation. Approaches to avoiding or mitigating these problems have included, for example, those described in U.S. Patent 4,950,694, in which a processing aid comprising one or more crosslinking and/or extending agents and preferably a cell opening agent are employed, and U.S. Patent 4,968,724, in which at least two hydrated salts that release water at a temperature above 80°C are employed. A preferred salt system is a combination of borax (sodium tetraborate decahydrate) and alum (aluminum potassium sulfate dodecahydrate). Japanese Patent Application No. 28427/75 and U.S. Patent 3,751,392 describe processes for preparing polyurethane foams by adding a hydrated alkali metal compound as a co-catalyst to the formulation. The hydrated alkali metal compounds include sodium borates, sodium phosphates, sodium carbonates, alum and the like.

Another known means of countering the exotherm problem is to substitute certain auxiliary blowing agents, such as the highly volatile halocarbon compounds, for a proportion of the water. However, while such substitution may reverse some of the negative effects from water use alone, environmental pressures to limit or prohibit use of certain halocarbon compounds indicate the need for alternatives. Therefore, to combat the exotherm problem and maintain foam quality, various foam modifiers have been suggested for use in water-blown formulations.

For example, U.S. Patent 4,686,240 discloses use of a foam modifier consisting of an alkali metal or alkaline earth metal ion and an anion of a Bronsted acid having a pKa of greater than 1, where the modifier is not (a) an inorganic alkaline earth metal salt having a water solubility of less than one gram of salt per 100 milliliters of water at 25°C, (b) an alkali metal dihydrogen phosphate, or (c) an alkali metal sulphate. The isocyanate index of the formulation is from 90 to 130.

Another foam modifier is hexahydro-s-triazine (U.S. Patent 4,814,359), which produces closed-cell foams at an index as low as 96 and at water levels greater than 5.5 parts based on 100 parts of polyol. Crushing is required to open the cells. U.S. Patent 3,560,544 describes triorganosiloxy end-blocked polyoxyalkylene siloxane polymers (which may be reacted with an amine or alkali or alkaline earth metal), useful as foam stabilizers.

It would be desirable to obtain additional and/or improved means of producing flexible polyurethane foams which exhibit good physical properties, particularly resiliency, load-bearing, tensile strength and tear strength. It would be further desirable if such means afforded acceptable formulation processing characteristics and preferably could be prepared with a relatively high proportion of open cells. It would also be desirable if such means allowed use of water as sole blowing agent to achieve desirably low densities.

Accordingly, the present invention provides in one aspect a flexible polyurethane foam composition prepared from a formulation characterized by (1) an organic polyisocyanate, (2) an isocyanate-reactive component, (3) a catalyst, and (4) a foam stabilizing agent. The formulation can further include water. The foam stabilizing agent is selected from: (a) alkali metal dihydrogen phosphates and polyphosphates; (b) alkali metal sulfates: (c) aluminum sulfates, phosphates, polyphosphates, borates and alkanoates; (d) ammonium sulfates, phosphates, polyphosphates, borates and alkanoates; (e) acid chlorides; and (f) mixtures thereof. The organic polyisocyanate and isocyanate-reactive component are preferably present in amounts such that an isocyanate index of from 70, more preferably 80, still more preferably 85, and most preferably from 90 and preferably to 130, more preferably to 110, still more preferably to 105 and most perferably to 100, is employed. The isocyanate-reactive component preferably has an average nominal functionality of greater than or equal to 3. Surfactants and other typical polyurethane formulation components can also be employed in the formulations of the present invention.

In another aspect the present invention is a flexible polyurethane foam composition prepared from a formulation characterized by the previously described components but without a foam stabilizing agent. The isocyanate index and functionality of the isocyanate-reactive component are as previously described.

In another aspect the present invention is a method of preparing the flexible polyurethane foam compositions of the invention by reacting the formulation components under reaction conditions suitable for preparing a polyurethane foam. The foam may be a slabstock or molded flexible foam.

In yet another aspect the present invention is an isocyanate-reactive component for preparing a flexible polyurethane foam comprising an isocyanate-reactive compound and a foam stabilizing agent. A process to prepare this component is also described.

Surprisingly, the polyurethane compositions of the present invention, containing the described foam stabilizing agent, may be flexible polyurethane foams, preferably thermoset but which also may be thermoplastic, which exhibit improved physical properties, particularly cell geometry, resiliency, load-bearing, tensile strength and tear strength; acceptable formulation processing characteristics; and desirably low density, even when using only water as a blowing agent, when compared with foams prepared from formulations that are identical except that they lack the foam stabilizing agent.

In some embodiments, the combination of a relatively low isocyanate index and a relatively high-functionality isocyanate-reactive component further contribute to property improvements in polyurethane foams, with or without the use of the foam stabilizing agent.

In general the present invention comprises three major embodiments: The use of the foam stabilizing agent in general; the use of the foam stabilizing agent in combination with the relatively high functionality isocyanate-reactive component and at relatively low index; and the use of the relatively high functionality isocyanate-reactive component together with relatively low index in general.

A key feature of one aspect of the present invention is the inclusion in a flexible polyurethane foam formulation, which contains a catalyst, of an amount of a foam stabilizing agent. The term "foam stabilizing agent" as used herein means any compound or combination of compounds that serve to measurably and progressively reduce the activity of the catalyst, particularly after the point of gellation of the polyurethane. This progressive reduction of activity can be illustrated by comparing a polyurethane formulation containing a foam stabilizing agent with a formulation which is otherwise identical but which lacks the foam stabilizing agent. The comparison is designed to show how much catalyst is still available for reaction following gellation. One effective and indirect means to do this is to combine the foam stabilizing agent with one "side" of the formulation (generally termed the "A-side" or "B-side") for varying periods of time prior to reaction to form the polyurethane, and then to react the formulation and measure the time to gellation following reaction. The results show that, with increasing times of contact between the foam stabilizing agent and the catalyst, a reduced amount of catalyst remains available for the reaction (that is, gellation is delayed), as compared with the formulation which lacks the foam stabilizing agent. Thus, a means for predicting the relative level of activity reduction of a particular foam stabilizing agent candidate in any specific formulation following gellation is provided.

This does not, however, imply that the foam stabilizing agent, as defined herein, acts in a formulation to delay gellation. In fact, in some cases such gellation delay is, indeed, encountered, but this is not true in all cases. The definition of the foam stabilizing agent resides, rather, in its effect on the catalyst after gellation. While not wishing to be bound by any theory, it is hypothesized that the foam stabilizing agent acts by interfering with the reverse audition reaction of the catalyst which can occur after gellation, and which is intensified by conditions of high temperature and/or reduced isocyanate index. Such reverse addition reaction is suspected to contribute to degradation of the network which adversely affects certain desirable physical properties of the final foam. The foam stabilizing agent reduces catalyst involvement in the reaction and thereby allows for the improved preservation or even augmentation of the foam properties that are inherent prior to initiation of the reverse addition reaction.

The foam stabilizing agent can be selected from, for example, (a) alkali metal dihydrogen phosphates and polyphosphates; (b) alkali metal sulfates; (c) aluminum sulfates, phosphates, polyphosphates, borates and alkanoates; (d) ammonium sulfates, phosphates, polyphosphates, borates and alkanoates; (e) acid chlorides; and (f) mixtures thereof. Thus, the cation of the above-listed salts can be, for example, lithium, sodium, potassium, rubidium, cesium, francium, calcium, barium, strontium, radium, aluminum, ammonium or a mixture thereof. The term "ammonium" as used herein includes alkylammonium, arylammonium, and alkylarylammonium, as well as ammonium itself, and further encompasses mono-, di-, tri-, and tetra-substituted species. It is also to be understood that as used herein the term "phosphates" includes any compound having one phosphate moiety, and that "polyphosphates" includes oxphosphorus and oxyphosphorous acids and salts, that is, any compound containing more than one phosphate moiety, for example, phosphorates, phosphites, phosphonates, and phosphonites, as well as pyrophosphates. The term "sulfates" as used herein includes oxysulphur acids and salts, that is, any compound having one or more sulfate moieties, for example, sulfites, sulphonates, and sulphonites.

The foam stabilizing agent is incorporated into any effective, preferably water-blown, flexible polyurethane foam formulation. Such formulations typically include an organic polyisocyanate. This polyisocyanate can be selected from those known in the art, generally including those aliphatic, aromatic, and cycloaliphatic polyisocyanates containing at least two isocyanate groups. For example, suitable polyisocyanates include hydrocarbon diisocyanates (for example, the alkylene diisocyanates and the arylene diisocyanates such as toluene diisocyanate and derivatives thereof); triisocyanates; and polymethylene poly(phenylene isocyanates). Among these are 1,2-diisocyanatoethane, 1,4-diisocyanatobutane, 2,4-diisocyanatotoluene, 2,6-diisocyanatotoluene, 3,5-diisocyanato-o-xylene, 4,6-diisocyanato-m-xylene, 2,6-diisocyanato-p-xylene, 2,4-diisocyanato-1-chlorobenzene, 2,4-diisocyanato-1-nitrobenzene, 2,5-diisocyanato-1-nitrobenzene, 4,4'-diphenylmethylene diisocyanate (MDI), 3,3'-diphenylmethylene diisocyanate, and poly(phenyleneisocyanates) having the general formula 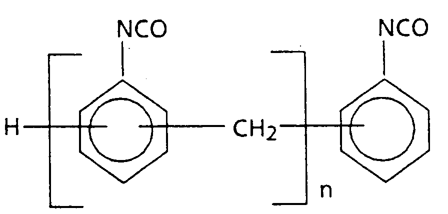
wherein n has an average value from 1.1, preferably from 2.0 to 5, preferably to 3.0 inclusive. The preferred polyisocyanates are mixtures of 80 percent by weight of 2,4-toluene diisocyanate and 20 percent by weight 2,6-toluene diisocyanate (TDI), and mixtures of 80 percent by weight TDI and 20 percent by weight of a polymeric polymethylene poly(phenyleneisocyanate) of the formula: 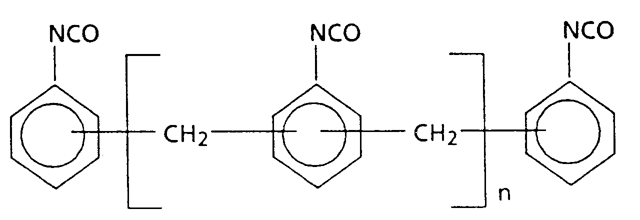
wherein n ranges from 0 to 2, and is preferably 0.6. So-called "liquid MDI" is also included. In general, polyisocyanates of the TDI type are preferred for use in the present invention.

In the practice of the present invention an isocyanate-reactive component is also employed. While water may be included in some embodiments of the present invention, it is to be understood that the term "isocyanate-reactive component" as used herein refers to compounds other than water which react with polyisocyanates, generally to form polyurethane, polyurea, or polyurethane/polyurea polymers. This isocyanate-reactive component is preferably a hydroxy-functional compound such as a polyol, and may be of the polyether or polyester type. Polyether polyols are preferred. In general any polyol typically employed for preparation of flexible polyurethane foams is suitable, and can have hydroxyl numbers which vary over a relatively wide range, from 10, preferably from 15, to 100, preferably to 85.

In a preferred embodiment of the present invention a polyol having a relatively high nominal functionality is employed. This is a preferred embodiment as it relates to use of the foam stabilizing agent. Also, use of such relatively high functionality polyol in conjunction with reduced index as described below represents another aspect of the present invention which shows improved results even in the absence of the foam stabilizing agent. "Nominal functionality" as used herein refers to the number of reactive sites on the polyol's initiator. This is used with regard to a polyol in which there is a relatively large number of hydroxyl groups per molecule. Such is defined herein as having greater than or equal to 3 hydroxyl function-alities per polyol molecule, preferably from 3, more preferably from 3.1, and most preferably from 3.2, preferably to 6, more preferably to 5, and most preferably to 4. It will be understood that the relatively high functionality refers to that of the entire isocyanate-reactive component, which may be a single isocyanate-reactive compound, for example, a polyol, or, preferably, a blend of related or unrelated isocyanate-reactive compounds. Thus, blends in which one or more compounds have nominal functionalities of less than 3.0 are also suitable, but it is preferred that these blends include compounds having sufficient amounts of higher functionality compounds such that the blend as a whole has an average nominal functionality of greater than or equal to 3. Preferably the selected relatively high functionality component includes at least one compound having an equivalent weight of at least 400, more preferably from 400, still more preferably from 1,000, to 10,000, more preferably to 7,000, still more preferably to 5,000.

Preferred polyols include those selected from the following classes of compositions, alone or in admixture: (a) alkylene oxide adducts of polyhydroxyalkanes; (b) alkylene oxide adducts of non-reducing sugars and sugar derivatives; (c) alkylene oxide adducts of phosphorus and polyphosphorus acids; and (d) alkylene oxide adducts of polyphenols. Polyols of these types are referred to herein as "base polyols". Examples of alkylene oxide adducts of polyhydroxyalkanes useful herein are adducts of: ethylene glycol, propylene glycol, 1,3-dihydroxypropane, 1,4-dihydroxybutane, and 1,6-dihydroxyhexane, glycerol, 1,2,4-trihydroxybutane, 1,2,6-trihydroxyhexane, 1,1,1-trimethylolethane, 1,1,1-trimethylolpropane, pentaerythritol, polycaprolactone, xylitol, arabitol, sorbitol, mannitol, sucrose, various amines and the like. Particularly preferred are adducts of polyhydroxyalkanes having higher nominal function-alities, such as sucrose and sorbitol, are preferred, blended with adducts of lower functionality, such as glycerol, to achieve the final desired average nominal functionality.

Also preferred are poly(oxypropylene) glycols, triols, tetrols and hexols and any of these that are capped with ethylene oxide. These polyols also include poly(oxypropyleneoxyethylene)polyols. The oxyethylene content preferably comprises less than 80, more preferably less than 40, weight percent, of the total. The ethylene oxide can be incorporated in any way along the polymer chain, for example, as internal blocks, terminal blocks, or randomly distributed blocks, or any combination thereof.

The base polyols described above can contain small amounts of "inherent" unsaturation, that is, unsaturation due to the isomerization of propylene oxide to allyl alcohol during the manufacture of the polyol. In some cases it may be desirable to include additional unsaturation in the polyols.

Polyamines, amine-terminated polyols, polymercaptans and other isocyanate-reactive compounds are also suitable. Another preferred class of polyols includes the "copolymer polyols", which are base polyols containing stably dispersed polymers such as acrylonitrile-styrene copolymers.

Other types of polyols useful in the process of the invention include polyurea polyols, such as are disclosed in, for example, U.S. Patents 3,325,421; 4,042,537; 4,089,835, polyoxamate polyols, such as are disclosed in U.S. Patent 4,407,983; and polyisocyanate-polyaddition products, such as are disclosed in U.S. Patents 4,374,209; 4,324,716; 4,310,448; 4,310,449; 4,305,857; and 4,305,858.

Another preferred component of the formulations is water, which serves as a blowing agent by generating carbon dioxide in reaction with the polyisocyanate. While auxiliary blowing agents, such as the low-boiling halogenated methanes and other halocarbon and hydrocarbon compounds commonly used for blowing can also be employed, a particular advantage is that water can be used as the sole blowing agent without encountering the unacceptable exotherm problems or poor physical properties that are conventionally expected in preparing flexible slab or molded foams blown using only water.

In addition to the major components as described above, the formulations also include one or more catalysts. Combinations of catalysts are often used to produce the desired amounts, rates and sequencing of urethane formation and blowing, and therefore to contribute to the desired final properties of the polyurethane foam. In the present invention, use of the foam stabilizing agent in combination with the selected catalyst package produces even better physical properties of some types, due to the progressive reduction of the catalyst activity resulting from the foam stabilizing agent.

Preferred catalysts are metal salts, such as salts of tin, lead or copper. Of these, tin(II) and tin(IV) catalysts are more preferred, and tin(II) catalysts are most preferred. Organo-metallic catalysts are also preferred, such as organotin catalysts. For example, tin(II) alkanoates such as stannous formate, stannous acetate, stannous propanoate, stannous butanoate, and stannous octoate may all be advantageously used. Other useful organotin catalysis include dibutyltin dimaleate, dibutyltin dilaurate, dibutyltin dilauryl sulfide, and dibutyltin oxide are particularly suitable in some formulations. Those skilled in the art will know to adjust the level of catalyst in order to optimize processing of the formulation.

Other catalysts that can be used include tertiary amines, such as bis(N,N-di-methylaminoethyl)ether, trimethylamine, triethylamine, N-methylmorpholine, dimethylaminoethyl morpholine, N,N,N',N'-tetramethylhexanediamine, N-ethyl-morpholine, N,N-dimethylethanolamine, N,N,N',N'-tetramethyl-1,3-butanediamine, triethanolamine, 1,4-diazobicyclo(2,2,2)octane, pyridine oxide, mixtures thereof and the like. Preferred amine catalysts are bis(N,N-di-methylaminoethyl)ether and 1,4-diazobicyclo(2,2,2)octane. The amine catalysts can be dissolved in solvents, such as glycols including dipropylene glycol, and can be partially neutralized. Such neutralization is commonly done using a carboxylic acid such as formic acid. It is preferred that these catalysts be used in conjunction with the metal salt catalysts, such as the organo-metallic catalysts described above.

Surfactants, typically silicone-based surfactants, are also typically used in flexible foam formulations. Those useful in the present invention include, for example, "hydrolyzable" and "non-hydrolyzable" polysiloxane-polyoxyalkylene block copolymers, cyanoalkylpolysiloxanes, polydimethylsiloxanes containing minor amounts of other silicon-bonded hydrocarbon substituents (for example, betaphenylethyl groups) and the like. The use of silicone surfactants increases foam stability in general and produces finer cell structure. The silicone surfactants can be dissolved in solvents such as glycols, or added to the isocyanate-reactive component or the isocyanate component without dissolution.

Finally, additional formulation components may be used. These include those additives and modifiers commonly used in polyurethane foam, such as, for example, pigments, antioxidants, colorants, fillers, flame retardancy agents, ultraviolet light stabilizing agents, and mixtures thereof.

As is known in polyurethane foam art, the proportions of the selected components determine the processing characteristics and physical properties of the final flexible foam. Adjustment of the amount of each component to achieve a desired characteristic or property will be already within the knowledge of the skilled artisan or will be easily discernible through routine experimentation. In general it is preferred that the proportion of the organic polyisocyanate and the isocyanate-reactive compound be such that an isocyanate index of from 70 to 130, more preferably from 80 to 110, still more preferably from 85 to 105, and most preferably from 90 to 100, be attained. In particular, the lower isocyanate indices offer the opportunity to further alleviate exotherm problems encountered when a relatively large amount of water is employed as the blowing agent. The reduced indices (those having upper range limits of 105 or less), in combination with the relatively high functionality isocyanate-reactive component, offer improvements in foam quality and processability even in the absence of the foam stabilizing agent, as discussed above. However, for many formulations the combination of the foam stabilizing agent and the relatively high functionality component at reduced index is synergistic in desirable effect.

The proportions of remaining components are then based at least in part upon the amount of the isocyanate-reactive compound. Thus, it is preferred that the amount of water is from 2, more preferably 2.5, to 12, more preferably 6.5, parts, based on 100 parts of polyol. The foam stabilizing agent is preferably added in an amount from 0.001, more preferably 0.01, most preferably 0.05 to 2, more preferably to 1, most preferably to 0.25, parts, based on 100 parts of polyol. Larger amounts, however, may be particularly desirable when an MDI is selected as the isocyanate component. The catalyst component is preferably present in an amount from 0.001 to 5, more preferably to 3, parts per 100 parts of polyol. The surfactant component, if desired, is preferably present in an amount from 0.1, more preferably from 0.5, to 5, more preferably to 2.5, parts per 100 parts of polyol for molded foams, or from 0.3, more preferably from 0.7, to 4, more preferably to 2.5, parts, for slabstock foams. Other additives and modifiers, such as pigments, colorants, antioxidants, flame retardant additives, and fillers are preferably present in an aggregate amount of less than 5 parts per 100 parts of polyol.

It will be understood that the limitations and preferences described above will be applicable to foams wherein the foam stabilizing agent is used in general; wherein the agent is used in combination with the relatively high functionality isocyanate-reactive compound at relatively low index; and wherein the relatively high functionality isocyanate-reactive compound is employed at relatively low index in general, that is, not in combination with the foam stabilizing agent. Thus, disclosure herein enables practice of each of the major embodiments of the present invention.

The formulations of the present invention can be prepared using any of the methods known to those skilled in the art of preparing flexible slabstock or molded foams. Orders of addition can be varied, although it is customary for most components, except for the polyisocyanate, to be blended together prior to reaction of the polyisocyanate with the isocyanate-reactive component. This reaction is generally carried out in the presence of catalysts. The result, as is well known to those skilled in the art, is an exothermic polymerization. Temperature control is typically considered to be important, since the viscosity, density and chemical reactivity of isocyanates and isocyanate-reactive components vary with temperature. Polyurethanes are made almost exclusively by the one-shot process, meaning that the raw materials are either metered separately to a mix head, or are pre-blended into one of two masterbatches based on the polyisocyanate and the isocyanate-reactive component. The formulation can be poured into a mold or used to produce a slabstock foam bun, which is generally done on continuous foam machines. Alternatively, discontinuous box foaming is utilized on a laboratory scale and, in some cases, for low volume specialty grades of foam. To prepare molded foams typically a mold is preheated and waxed with a mold release agent, then the formulation components are added and the resulting foam is allowed to cure before being stripped from the mold. Artisans will be familiar with these methods and with their variations without further direction.

The order or means of addition of the foam stabilizing agent, or blend thereof, where desired, is not critical. However, it is preferred that the agent is dissolved in the water used as a blowing agent prior to admixture of the water with the polyol and, eventually, with the isocyanate component.

In another embodiment, a foam stabilizing agent can be selected such that it is soluble in the selected polyol, thereby obviating predissolution in the water. In still another embodiment, the agent, or a portion thereof, can be prepared in situ in the polyol, for example, starting with the presence of a residual alkali metal which may be the result of certain polyol preparation processes. In still another embodiment, the agent can be added in a "carrier stream" of some kind, for example, as part of a catalyst-containing "third stream". In yet another embodiment, the agent can be added to the isocyanate prior to reaction of the isocyanate with the polyol.

The following examples are given to more fully illustrate the present invention. As such they are not intended to be, nor should they be construed as being, limitative of its scope in any way. All parts and percentages are based on 100 parts of polyol unless otherwise indicated.

Unless otherwise stated, the silicone surfactant employed in the examples is TEGOSTAB BF 2370, a product of Goldschmidt Chemical Company; the amine catalyst is DABCO 8264, a product of Air Products and Chemicals, Inc.; QC-5160 is a silicone surfactant available from Dow Corning Corporation; the tin catalyst is T-9 (stannous octoate), also a product of Air Products and Chemicals, Inc.; and toluene diisocyanate employed is an 80/20 (weight) mixture of 2,4- and 2,6-toluene diisocyanate, respectively.

Polyether polyols employed in the examples are as follows:
- Polyether Polyol A: is an ethylene oxide/propylene oxide heterofed, sucrose/glycerine-coinitiated polyol of about 1200 equivalent weight and average functionality greater than 3.
- Polyether Polyol B: is an ethylene oxide/propylene oxide heterofed, glycerine-initiated polyol of about 1000 equivalent weight and average functionality of about 3.
- Polyether Polyol C: is an ethylene diamine initiated polyether polyol, molecular weight about 4,000, ethylene oxide/propylene oxide heterofed, having a nominal functionality about 3.7.
- Polyether Polyol D: is a pentaerythritol initiated polyether polyol, molecular weight about 4,000, ethylene oxide/propylene oxide heterofed, having a nominal functionality about 3.7.
- Polyether Polyol E: is a sucrose/glycerine coinitiated polyether polyol, molecular weight about 4,600, ethylene oxide/propylene oxide heterofed, having a nominal functionality about 3.9.

### Comparative Example A

Four flexible slabstock foams, Samples 1-4, were prepared from the formulations shown in Table 1.

**Table 1**

| Component | Sample 1 | Sample 2* | Sample 3 | Sample 4* |
|---|---|---|---|---|
| Polyether Polyol A | 100 | 100 | 0 | 0 |
| Polyether Polyol B | 0 | 0 | 100 | 100 |
| Water | 6 | 6 | 6 | 6 |
| Silicone Surfactant | 1.2 | 1.2 | 1.1 | 1.1 |
| Amine Catalyst | 0.13 | 0.13 | 0.2 | 0.2 |
| Toluene diisocyanate | 59.1 | 59.1 | 60.1 | 60.1 |
| Tin Catalyst | 0.25 | 0.21 | 0.5 | 0.5 |
| KH₂PO₄ | 0.04 | 0 | 0.08 | 0 |

| | | | | |
|---|---|---|---|---|
| *indicates not an example of the present invention. | | | | |

The formulation components were mixed using a typical "one-shot" mixing technique in a bench top box foamer. The "B-side", that is, everything except the TDI, was mixed at 1,800 rpm for 15 seconds. The potassium dihydrogen phosphate was dissolved in the water prior to addition of the water to the polyol. The TDI was then added to the B-side and mixed at 2,400 for 3 seconds. The mixed formulation was poured into a 15 x 15 x 9 inch lined box to complete foaming and curing. The total polyol charge was 600 g, and the box foam was prepared at an isocyanate index of 90. Physical property testing was conducted on the samples according to ASTM 35D-3574 (1986). The results are shown in Table 2.

**Table 2**

| Property | Sample 1 | Sample 2* | Sample 3 | Sample 4* |
|---|---|---|---|---|
| Density (kg/m³) | 19.22 | 19.22 | 19.22 | 19.22 |
| Tensile strength (kN/m³) | 84.8 | 57.2 | 102.7 | -- |
| Elongation (percent) | 165 | 120 | 281 | -- |
| Tear resistance (N/cm) | 3.3 | 1.75 | 3.3 | -- |
| Compression set (%, 90 % compression at 70°C) | 7.3 | 12.4 | 8 | -- |
| 25 percent indentation force deflection (IFD) (N/323 cm²) | 107 | 107 | 93 | 80 |
| Air flow porosity (cubic meters per minute, m³/min., 1.27 cm water pressure drop) | 0.21 | 0.14 | 0.20 | ** |

| | | | | |
|---|---|---|---|---|
| *indicates not an example of the present invention. | | | | |
| --indicates not measurable. | | | | |
| ** indicates not measured. | | | | |

### Comparative Example B

A series of experiments was done to compare different loadings of potassium dihydrogen phosphate in identical formulations. The formulations were shown in Table 3. All of the samples were prepared using procedures as in Comparative Example A. The isocyanate index for each was 90.

**Table 3**

| Component | Sample 5* | Sample 6 | Sample 7 | Sample 8 | Sample 9 |
|---|---|---|---|---|---|
| Polyether Polyol A | 100 | 100 | 100 | 100 | 100 |
| Water | 6 | 6 | 6 | 6 | 6 |
| Silicone surfactant | 1.2 | 1.2 | 1.2 | 1.2 | 1.2 |
| Amine Catalyst | 0.13 | 0.13 | 0.13 | 0.13 | 0.13 |
| Toluene diisocyanate | 59.1 | 59.1 | 59.1 | 59.1 | 59.1 |
| Tin Catalyst | 0.21 | 0.21 | 0.21 | 0.23 | 0.25 |
| KN₂PO₄ | 0 | 0.005 | 0.01 | 0.02 | 0.04 |

| | | | | | |
|---|---|---|---|---|---|
| *indicates not an example of the present invention.. | | | | | |

The samples were then subjected to physical property testing as in the previous Example and the results are reported in Table 4.

**Table 4**

| Property | Sample 5* | Sample 6 | Sample 7 | Sample 8 | Sample 9 |
|---|---|---|---|---|---|
| Density (kg/m³) | 19.06 | 19.06 | 19.37 | 19.37 | 19.70 |
| Tensile strength (kN/m³) | 57.2 | 69.6 | 73.1 | 82.0 | 84.8 |
| Elongation (percent) | 119 | 159 | 143 | 218 | 249 |
| Tear resistance (N/cm) | 1.82 | 2.80 | 2.80 | 2.84 | 3.34 |
| Resiliency (percent) | 41 | 42 | 42 | 43 | 44 |
| Compression set (%, 90 % compression at 70°C) | 12.4 | 9.9 | 8.2 | 7.7 | 7.3 |

| Indentation force deflection (IFD) (N/323 cm²): | | | | | |
|---|---|---|---|---|---|
| 25 percent | 107 | 107 | 116 | 111 | 107 |
| 65 percent | 187 | 187 | 196 | 191 | 187 |
| Return to 25 percent | 62 | 62 | 67 | 67 | 67 |
| Percent hysteresis Return | 57.5 | 59.4 | 58.4 | 60.6 | 62.7 |
| Modulus | 1.74 | 1.73 | 1.71 | 1.72 | 1.76 |
| Air flow porosity (cubic meters per minute, m³/min., 1.27 cm water pressure drop) | 0.14 | 0.18 | 0.18 | 0.18 | 0.21 |

| | | | | | |
|---|---|---|---|---|---|
| *indicates not an example of the present invention | | | | | |

### Comparative Example C

Another series of experiments was done comparing potassium dihydrogen phosphate loadings. All experiments were carried out at an isocyanate index of 90. The formulations are shown in Table 5.

**Table 5**

| Component | Sample 10* | Sample 11 | Sample 12 | Sample 13 | Sample 14 |
|---|---|---|---|---|---|
| Polyether Polyol B | 100 | 100 | 100 | 100 | 100 |
| Water | 6 | 6 | 6 | 6 | 6 |
| Silicone surfactant | 1.1 | 1.1 | 1.1 | 1.1 | 1.1 |
| Amine Catalyst | 0.20 | 0.20 | 0.20 | 0.20 | 0.20 |
| Tin Catalyst | 0.50 | 0.44 | 0.50 | 0.50 | 0.50 |
| KH₂PO₄ | 0 | 0.02 | 0.04 | 0.06 | 0.08 |

| | | | | | |
|---|---|---|---|---|---|
| *indicates not an example of the present invention. | | | | | |

Properties were tested as in previous examples (ASTM 35D-3574) and the results are reported in Table 6.

**Table 6**

| Property | Sample 10* | Sample 11 | Sample 12 | Sample 13 | Sample 14 |
|---|---|---|---|---|---|
| Density (kg/m³) | 18.74 | 19.06 | 18.90 | 18.74 | 19.38 |
| Tensile strength (kN/m³) | -- | 53.8 | 38.6 | 55.16 | 96.5 |
| Elongation (percent) | -- | 127 | 84 | 133 | 281 |
| Tear resistance (N/cm) | -- | 1.66 | 1.02 | 1.96 | 3.45 |
| Resiliency (percent) | 36 | 38 | 38 | 37 | 42 |
| Compression set (%, 90 % compression at 70°C) | -- | 11 | 17 | 13 | 8 |

| Indentation force deflection (IFD) (N/323 cm²): | | | | | |
|---|---|---|---|---|---|
| 25 percent | 80 | 89 | 93 | 93 | 98 |
| 65 percent | 142 | 165 | 165 | 165 | 169 |
| Return to 25 percent | 40 | 53 | 53 | 53 | 58 |
| Air flow porosity (cubic meters per minute, m³/min., 1.27 cm water pressure drop) | ** | 0.17 | 0.12 | 0.15 | 0.21 |

| | | | | | |
|---|---|---|---|---|---|
| *indicates not an example of the present invention. | | | | | |
| --indicates not measurable. | | | | | |
| ** indicates not measured. | | | | | |

### Comparative Example D

A number of different compounds, including phosphates, and sulfates, were tested using the methods and procedures of the previous examples. The compositions were similar to those of Comparative Example A (100 parts of Polyether Polyol A, 6 parts water, and surfactant), but varying types of the foam stabilizing agent were used as shown in Table 7. The isocyanate index was 90. The amount of tin catalyst was also varied to optimize processing.

**Table 7**

| Component | Sample 15* | Sample 16 | Sample 17 | Sample 18 | Sample 19 | Sample 20 |
|---|---|---|---|---|---|---|
| KH₂PO₄ | -- | 0.06 | -- | -- | -- | -- |
| NaH₂PO₄ | -- | -- | 0.06 | -- | -- | -- |
| (NH₄)H₂PO₄ | -- | -- | -- | 0.06 | -- | -- |
| (NH₄)₂HPO₄ | -- | -- | -- | -- | 0.06 | -- |
| LiH₂PO₄ | -- | -- | -- | -- | -- | 0.06 |
| Tin Catalyst | 0.26 | 0.40 | 0.50 | 0.475 | 0.50 | 0.625 |

| | | | | | | |
|---|---|---|---|---|---|---|
| *indicates not an example of the present invention. | | | | | | |

Cream and rise time for each formulation, and physical properties of the resulting foams, were compared in Table 8.

**Table 8**

| Property | Sample 15* | Sample 16 | Sample 17 | Sample 18 | Sample 19 | Sample 20 |
|---|---|---|---|---|---|---|
| Cream time (sec) | 14 | 14 | 13 | 12 | 13 | 13 |
| Rise time (sec) | 93 | 135 | 116 | 96 | 114 | 129 |
| Density (kg/m³) | 19.9 | 20.7 | 20.5 | 20.2 | 20.2 | 20.2 |
| Tensile strength (kN/m³) | 62.1 | 82.7 | 83.4 | 86.2 | 84.1 | 84.1 |
| Elongation (percent) | 130 | 166 | 145 | 160 | 146 | 149 |
| Tear resistance (N/cm) | 2.45 | 3.36 | 3.75 | 3.78 | 3.73 | 3.5 |
| Resiliency (percent) | 41 | 44 | 44 | 42 | 42 | 38 |
| Compression set (%, 90 % compression at 70°C) | 9.0 | 8.4 | 7.9 | 7.9 | 7.0 | 7.2 |

| Indentation force deflection (IFD) (N/323 cm²): | | | | | | |
|---|---|---|---|---|---|---|
| 25 percent | 111 | 111 | 111 | 142 | 138 | 133 |
| 65 percent | 191 | 200 | 200 | 240 | 236 | 231 |
| Return to 25 percent | 62 | 71 | 71 | 80 | 80 | 80 |
| Air flow porosity (cubic-meters per minute, m³/min., 1.27 cm water pressure drop) | 0.16 | 0.14 | 0.20 | 0.15 | 0.16 | 0.16 |

| | | | | | | |
|---|---|---|---|---|---|---|
| *indicates not an example of the present invention | | | | | | |

### Comparative Example E

A number of different compounds including phosphates and sulfates were tested using the methods and procedures of the previous examples. The compositions were identical with those of Comparative Example A (100 parts of Polyether Polyol A, 6 parts water, and surfactant) but the foam stabilizing agents were varied as shown in Table 9. The isocyanate index was 90. The amount of tin catalyst was also varied to optimize processing.

**Table 9**

| Component | Sample 21* | Sample 22 | Sample 23 | Sample 24 | Sample 25* | Sample 26* | Sample 27 |
|---|---|---|---|---|---|---|---|
| KH₂PO₄ | -- | 0.06 | -- | -- | -- | -- | -- |
| (NH₄)SO₄ | -- | -- | 0.06 | -- | -- | -- | -- |
| KHSO₄ | -- | -- | -- | 0.06 | -- | -- | -- |
| ZnSO₄ | -- | -- | -- | -- | 0.10 | | -- |
| Li₂SO₄ | -- | -- | -- | -- | -- | 0.06 | -- |
| Al₂(SO₄)₃ | -- | -- | -- | -- | -- | -- | 0.06 |
| Tin Catalyst | 0.26 | 0.40 | 0.26 | 0.313 | 0.35 | 0.475 | 0.413 |

| | | | | | | | |
|---|---|---|---|---|---|---|---|
| * indicates not an example of the present invention. | | | | | | | |

Cream and rise time for each formulation, and physical properties of the resulting foams, were compared in Table 10.

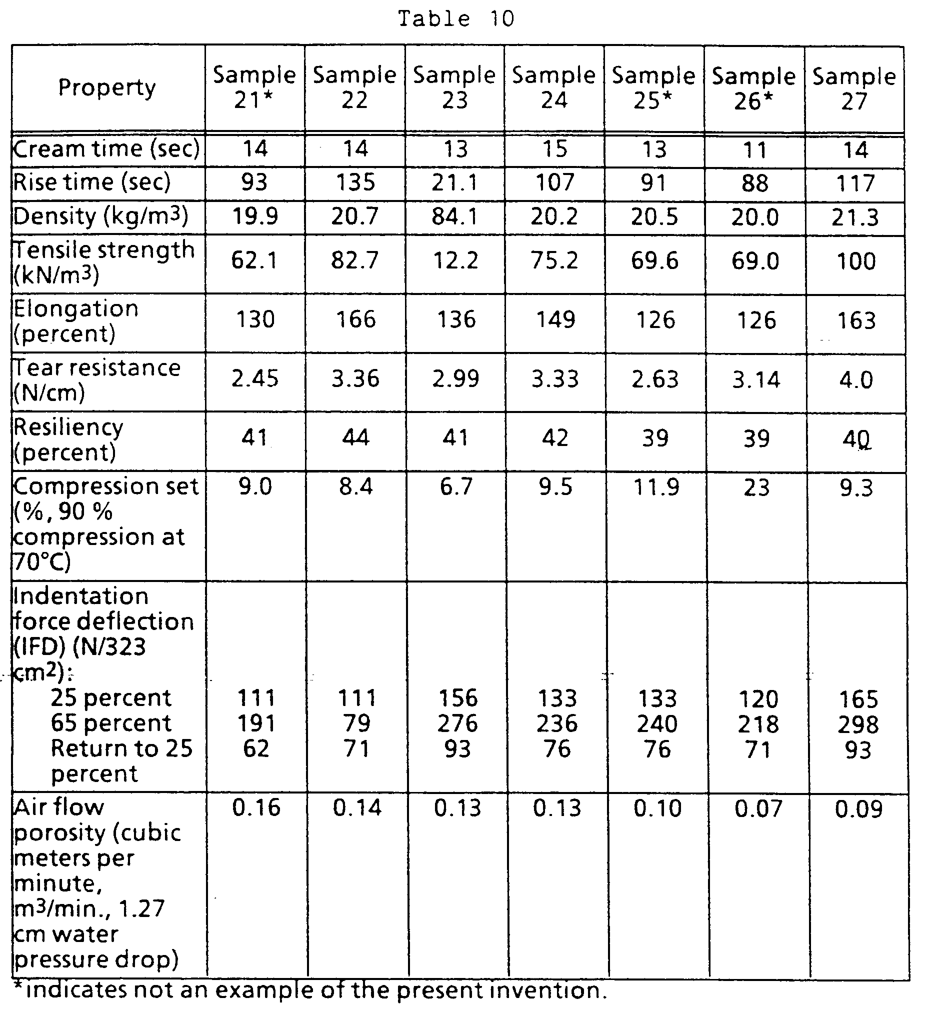

### Comparative Example F

A series of experiments were done using similar formulations as in Example 1 but comparing variations in the amounts of water used. All experiments were carried out at an isocyanate index of 90. The formulations are shown in Table 11.

**Table 11**

| Component | Sample 28* | Sample 29 | Sample 30* | Sample 31 | Sample 32* | Sample 33 |
|---|---|---|---|---|---|---|
| Polyether Polyol A | 100 | 100 | 100 | 100 | 100 | 100 |
| Water | 4 | 4 | 5 | 5 | 6 | 6 |
| Silicone surfactant | 1.0 | 1.0 | 1.0 | 1.0 | 1.1 | 1.1 |
| Amine Catalyst | 0.15 | 0.15 | 0.14 | 0.14 | 0.12 | 0.12 |
| Toluene diisocyanate | 41.6 | 41.6 | 50.3 | 50.3 | 59 | 59 |
| Tin Catalyst | 0.18 | 0.36 | 0.18 | 0.34 | 0.20 | 0.42 |
| KH₂PO₄ | * | 0.08 | * | 0.08 | * | 0.08 |

| | | | | | | |
|---|---|---|---|---|---|---|
| *indicates not an example of the present invention. | | | | | | |

Physical property testing was carried out as in previous examples. The results are shown in Table 12.

### Comparative Example G

A series of experiments were done using similar formulations as in Example 1 but varying the isocyanate index as shown. The formulations are shown in Table 13.

Physical property testing was carried out as in previous examples. The results are shown in Table 14.

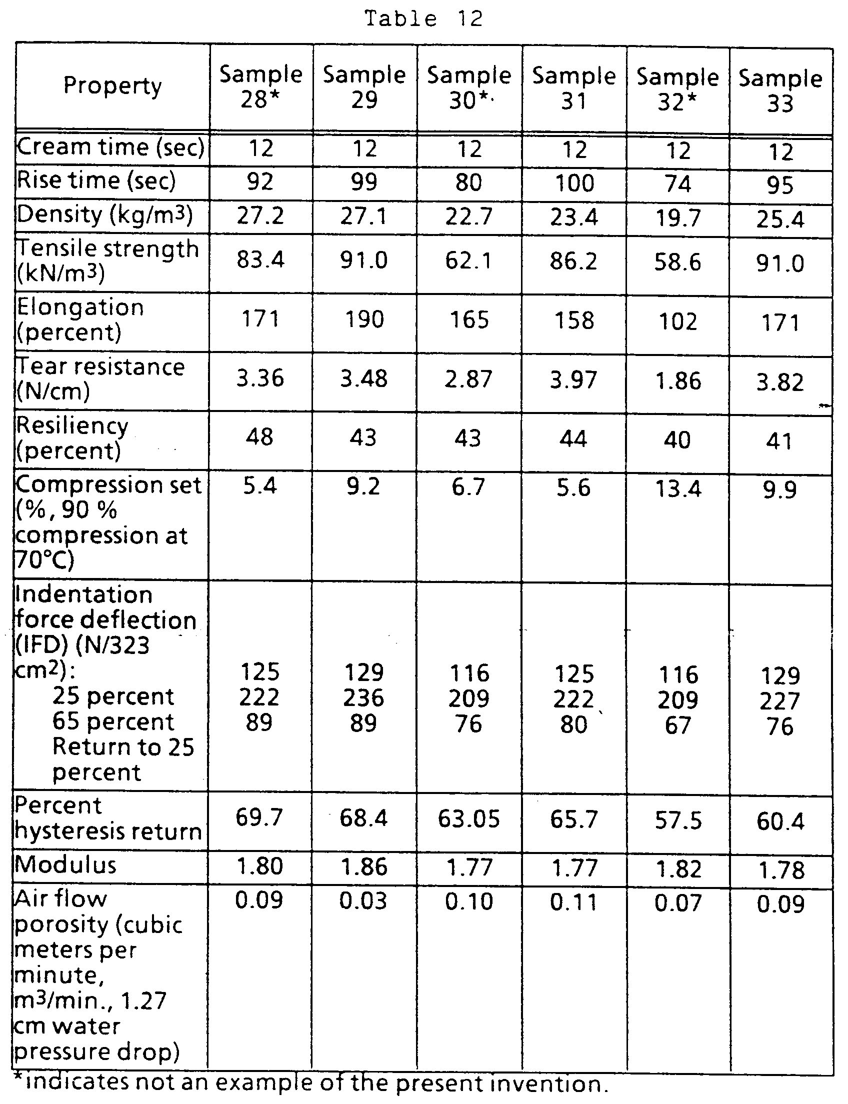

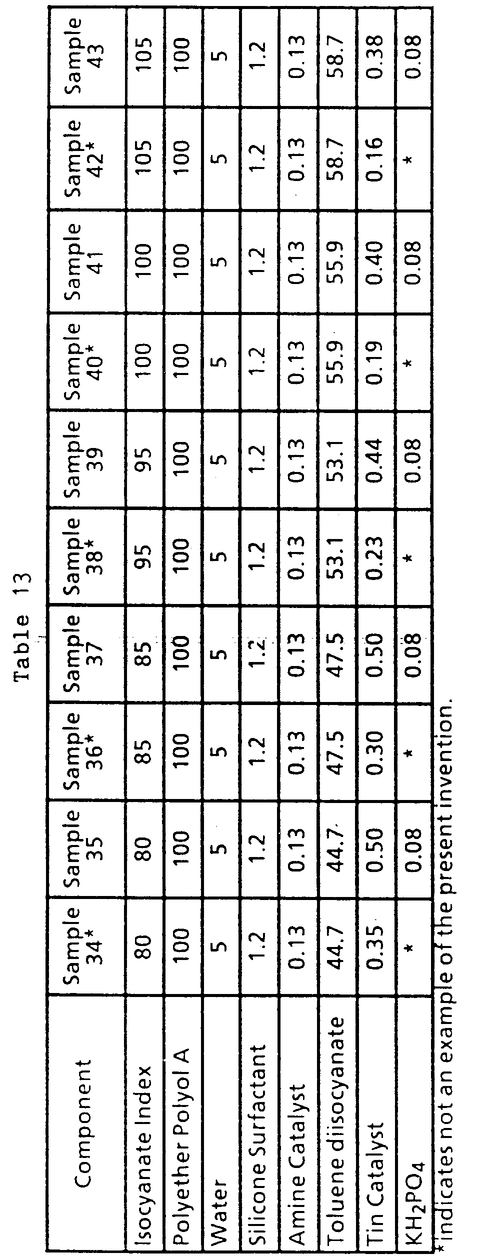

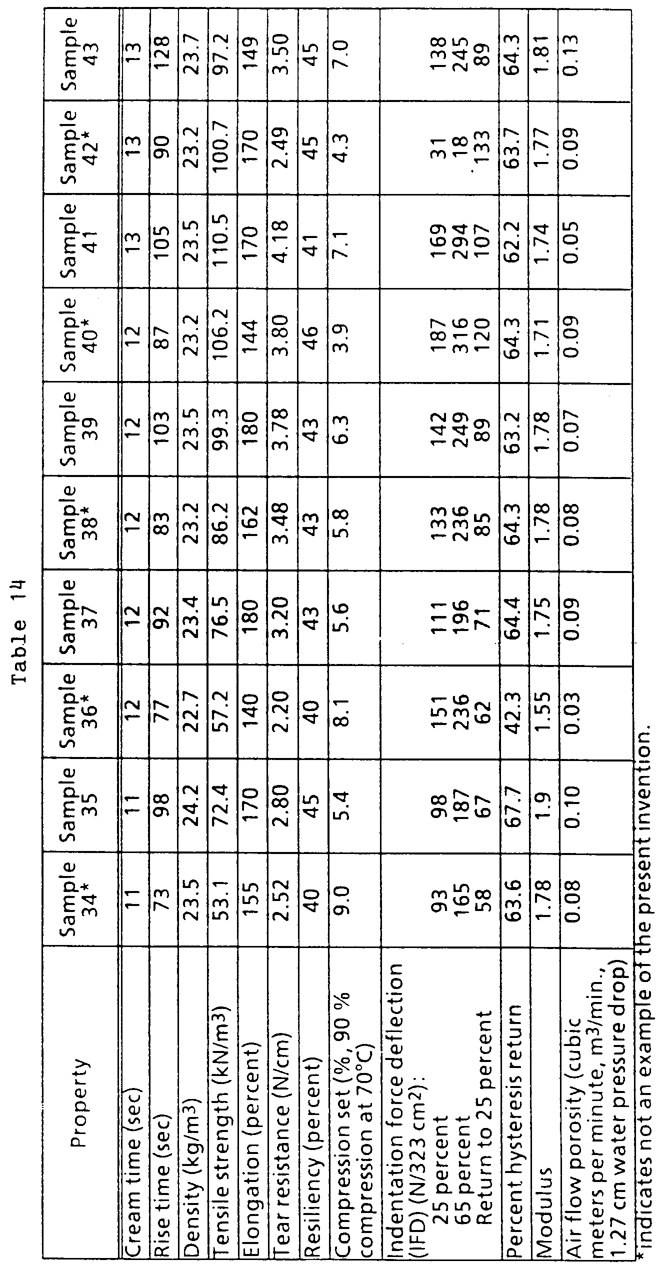

### Comparative Example H

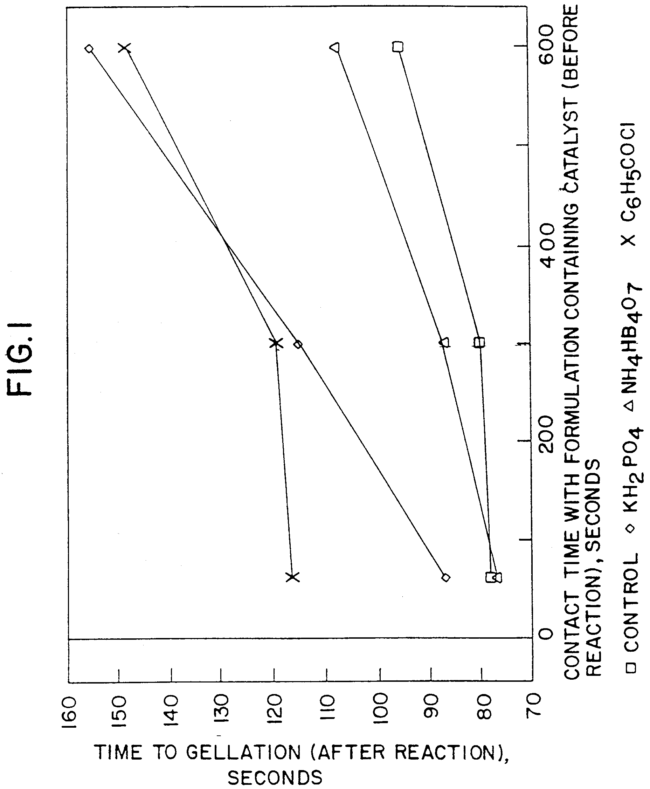

A comparison was performed to illustrate the relationship between the effect on catalytic activity of various foam stabilizing agents (potassium dihydrogen phosphate, ammonium tetraborate, and benzoyl chloride) and the amount of time that the foam stabilizing agent was in contact with the catalyst in a polyurethane foam formulation "B-side" component prior to reaction with the isocyanate. Identical formulations were employed, using identical amounts of the tin catalyst and water. A control formulation, without a foam stabilizing agent but with the same amount of tin catalyst and water, gas also tested. The results are shown in graphic form in the Figure. The results illustrate the relative levels of catalyst activity reduction or hindrance in the given formulation, as seen by delays in gellation time, as well as the rate of deactivation or hindrance relative to contact time. For example, it can be seen that potassium dihydrogen phosphate, benzoyl chloride and ammonium tetraborate each show significant levels of catalyst hindrance or activity reduction when compared with the control, which contains only water and tin catalyst.

### Comparative Example I

Five different flexible polyurethane foams were prepared using the formulations shown in Table 15. Of these Sample 44 was not representative of the present invention. All amounts were parts per 100 parts by weight.

**Table 15**

| Component | Sample 44* | Sample 45 | Sample 46 | Sample 47 | Sample 48 |
|---|---|---|---|---|---|
| Polyether Polyol A | 100 | -- | -- | -- | -- |
| Polyether Polyol B | -- | 100 | -- | -- | -- |
| Polyether Polyol C | -- | -- | 100 | -- | -- |
| Polyether Polyol D | -- | -- | -- | 100 | -- |
| Polyether Polyol E | -- | -- | -- | -- | 100 |
| Water | 6 | 6 | 6 | 6 | 6 |
| Silicone Surfactant | 1.1 | 1.1 | 1.2 | 1.2 | -- |
| Amine Catalyst | 0.20 | 0.12 | -- | 0.12 | 0.15 |
| Tin Catalyst | 0.25 | 0.20 | 0.22 | 0.18 | 0.25 |
| Toluene Diisocyanate | 60 | 59 | 59 | 59 | 59 |

| | | | | | |
|---|---|---|---|---|---|
| *not an example of the present invention | | | | | |

The "B-side" of the formulation, that is, the polyol, water, catalysts and surfactant, was blended first in a mix cup. The constituents were mixed using a typical "one-shot" technique for 15 seconds at 1,800 rpm using a mechanical agitator. The toluene diisocyanate was then added to the mix cup and the contents were vigorously mixed at 2,400 rpm for three seconds. The mixture was then dispensed into a lined wooden box measuring 15 x 15 x 9 inches, and allowed to react and expand to prepare a laboratory scale box foam. The total polyol charge was 600 g. Following cooling the resultant foams were tested for physical properties according to ASTM 35D-3574 (1986), and the data was recorded in Table 16.

**Table 16**

| Property | Sample 44* | Sample 45 | Sample 46 | Sample 47 | Sample 48 |
|---|---|---|---|---|---|
| Index | 90 | 90 | 90 | 90 | 90 |
| Cream time (sec.) | 13 | 13 | 7 | 16 | 15 |
| Blow off time (sec.) | 78 | 108 | 56 | 94 | 71 |
| Air flow porosity (cubic meters per minute, m³/min., 1.27 cm water pressure drop) | 0.10 | 0.11 | 0.12 | 0.16 | 0.05 |
| Compression set (%, 90 % compression at 70°C) | -- | 13.6 | 19.6 | 8.9 | 17.6 |
| Density (kg/m³) | 18.4 | 19.5 | 18.1 | 19.2 | 20.2 |

| Indentation force deflection (IFD, N/323 cm²) | | | | | |
|---|---|---|---|---|---|
| 25 percent | 80 | 115 | 80 | 111 | 129 |
| 65 percent | -- | 205 | 142 | 200 | 245 |
| Resiliency (percent) | -- | 42 | 40 | 39 | 36 |
| Tear resistance (N/cm) | -- | 1.73 | 3.15 | 4.0 | 2.3 |
| Tensile strength (kN/m³) | -- | 57.9 | 53.1 | 70.3 | 71.7 |
| Elongation (percent) | -- | 97 | 140 | 161 | 125 |
| not an example of the present invention. | | | | | |

| | | | | | |
|---|---|---|---|---|---|
| --indicates not measurable due to poor integrity. | | | | | |

### Comparative Example J

A semi-commercial scale (90 lbs./min. polyol throughput) machine run was conducted using a VARIMAX* continuous bunstock production machine (*VARIMAX is a trademark of Periphlex, Inc.). The throughput rate produces buns at a rate of approximately 8-10 feet by 2 feet by 2.5 feet per minute. The formulation is shown in Table 17.

Physical property testing of the samples produced was done as described in Comparative Example I and the results were recorded in Table 18.

**Table 17**

| Component | Sample 49* | Sample 50 |
|---|---|---|
| Polyether Polyol A | 100 | -- |
| Polyether Polyol B | -- | 100 |
| Water | 6 | 6 |
| Silicone Surfactant | 1.2 | 1.2 |
| Amine Catalyst | 0.12 | 0.12 |
| Tin Catalyst | 0.35 | 0.29 |
| Toluene Diisocyanate | 59.8 | 58.9 |

| | | |
|---|---|---|
| *not an example of the present invention. | | |

**Table 18**

| Property | Sample 49* | Sample 50 |
|---|---|---|
| Index | 90 | 90 |
| Air flow porosity (cubic meters per minute, m³/min., 1.27 cm water pressure drop) | -- | 0.11 |
| Compression set (%, 90 % compression at 70°C) | -- | 11.5 |
| Density (kg/m³) | -- | 19.2 |

| Indentation force deflection (IFD, N/323 cm²) | | |
|---|---|---|
| 25% | -- | 107 |
| 65% | -- | 182 |
| Resiliency (percent) | -- | 41 |
| Hysteresis (percent) | -- | 54 |
| Tear resistance (N/cm) | -- | 3.68 |
| Tensile strength (kN/m³) | -- | 77.2 |
| Elongation (percent) | -- | 210 |

| | | |
|---|---|---|
| *not an example of the present invention. | | |
| --indicates not measurable due to gross processing splits. | | |

## Claims

1. A flexible polyurethane foam composition prepared from a formulation characterized by (1) an organic polyisocyanate, (2) an isocyanate-reactive component, (3) a catalyst, and (4) water as a blowing agent, wherein the organic polyisocyanate and the isocyanate-reactive component are present in amounts such that an isocyanate index of from 80 to 105 is attained and the isocyanate-reactive component has an average nominal functionality of greater than or equal to 3.

2. The composition of Claim 1 wherein the isocyanate index is from 85 to 100 and the isocyanate-reactive component has a nominal functionality of from 3 to 6.

3. The composition of Claim 1 wherein water is the sole blowing agent.
